# EUROPEAN PATENT SPECIFICATION

(11) **EP 2 017 917 B1**
(45) Date of publication and mention of the grant of the patent: **10.04.2013**
(21) Application number: 08157591.2
(22) Date of filing: 04.06.2008
(51) Int. Cl.: H01M 10/42, H01M 10/44, H01M 10/0525

(54) **Software-implemented overcurrent protection embedded in a battery pack**
Software-implementierter Überspannungsschutz in einem Batteriepack
Protection de surintensité à exécution sur logiciel intégré dans un bloc-batterie

(30) Priority: 07.06.2007 US 933695 P
(43) Date of publication of application: 21.01.2009
(73) Proprietor: Black & Decker, Inc., Newark, DE 19711 (US)
(72) Inventor: Cruise, Nathan, Phoenix, Maryland 21131, (US); Seman, Jr. Andrew E., White Marsh, Maryland 21162 (US); Howard, Geoffrey S.,, Columbia, Maryland 21045, (US); White, Daniel J.,, Baltimore, Maryland 21220, (US)
(74) Representative: Bell, Ian Stephen

(56) References cited:
- FR-A1- 2 867 319
- US-A1- 2005 248 318
- US-B1- 6 388 426

## Description

The present disclosure relates to a battery pack and, more particularly, to a software-implemented overcurrent protection mechanism embedded in a battery pack.

Over the past few years, lithium-ion (Li-ion) batteries have begun replacing nickel-cadmium (NiCd), nickel-metal-hydride (NiMH), and lead-acid batteries in low-voltage, portable electronic devices such as notebook-type personal computers. As compared to NiCd and NiMH batteries, Li-ion batteries are lighter but have a larger capacity per unit volume. For this reason, the Li-ion batteries are suitable to low-voltage devices that are preferably light and which are required to endure continuous use for a long time.

Unlike a NiCd battery pack and a NiMH battery pack, Li-ion batteries deteriorate rapidly in an over-discharged state. Thus, a Li-ion battery pack may include functionality to protect against fault conditions inside and outside the Li-ion battery pack. This prevents cells in the Li-ion battery pack from deteriorating and shortening useful life of the pack. For instance, if a fault condition such as short-circuiting occurs inside or outside the Li-ion battery pack, a fuse may be provided to cut off an over-discharging current or an overcharging current, if the discharging current or charging current becomes larger than a given current level. However, a mechanical fuse needs to be replaced before the battery pack can be used again.

Therefore, it is desirable to provide a software-implemented fuse within in a battery pack. A software-implement protection mechanism enables the fuse to be tripped under different operating conditions. Moreover, a software-implemented fuse may be reset after being tripped without intervention from a user. The statements in this section merely provide background information related to the present disclosure and may not constitute prior art.

US6388426 discloses a battery power source protecting device for an electromotive device which comprises a control circuit for measuring the battery voltage, intermediate voltage and discharge current of a rechargeable battery comprising rechargeable cells.

US2005/0248318 discloses a cordless power tools with a protected weak link element.

An overcurrent protection mechanism is provided for a battery pack that may removably attaches to a power tool. The mechanism includes: one or more battery cells disposed in a battery pack; a current sensor configured to sense current supplied by the battery; a switch in a circuit path with the battery cells; and a battery control unit implemented as software instructions in a controller embedded in a battery pack. The battery control unit is configured to receive a signal indicative of current from the current sensor and control the switch to interrupt current flow from the battery cells as a function of current and time.

Accordingly, there is provided a battery pack in accordance with claim 1.

Further areas of applicability will become apparent from the description provided herein. It should be understood that the description and specific examples are intended for purposes of illustration only and are not intended to limit the scope of the present disclosure.
Figure 1 is a diagram of an exemplary system of power tools;
Figure 2 is a schematic of an exemplary circuit configuration for an overcurrent protection mechanism integrated into a battery pack;
Figure 3 is a schematic of an alternative circuit configuration for an overcurrent protection mechanism integrated into a battery pack;
Figure 4 is a graph illustrating an exemplary trip point for a software-implemented fuse;
Figure 5A is a flowchart showing an exemplary implementation for the fuse;
Figure 5B is a flowchart showing another exemplary implementation for the fuse; and
Figures 6A and 6B are a flowchart showing exemplary criteria which may be checked before a software-implemented fuse is reset.

The drawings described herein are for illustration purposes only and are not intended to limit the scope of the present disclosure in any way.

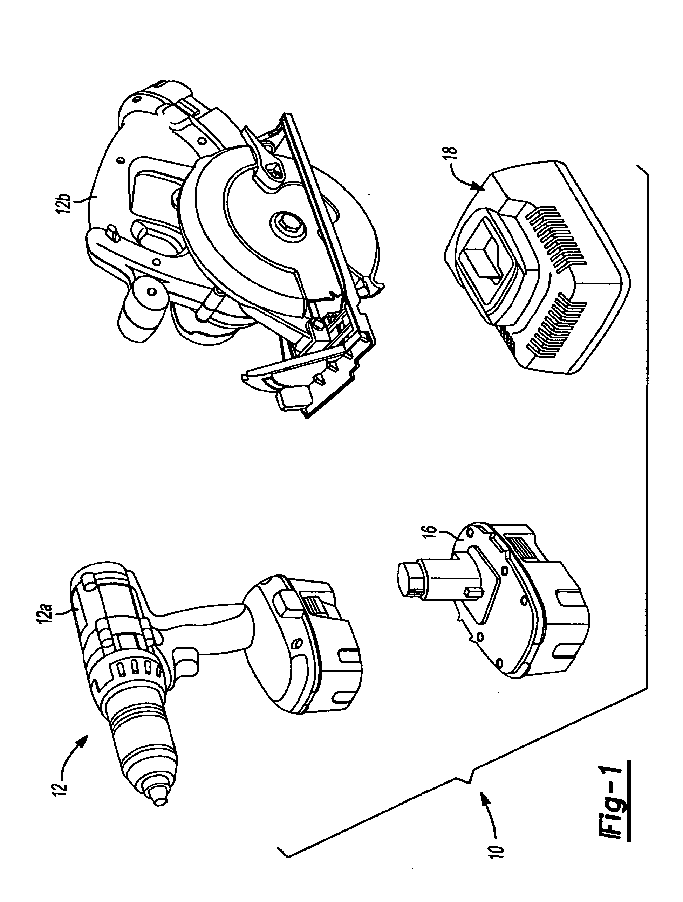

The present disclosure can relate to a system of power tools of the type that is generally indicated by reference numeral 10 in Figure 1. The system of power tools 10 can include, for example, one or more power tools 12, a battery pack 16 and a battery pack charger 18. Each of the power tools 12 can be any type of power tool, including without limitation drills, drill/drivers, hammer drill/drivers, rotary hammers, screwdrivers, impact drivers, circular saws, jig saws, reciprocating saws, band saws, cut-off tools, cut-out tools, shears, sanders, vacuums, lights, routers, adhesive dispensers, concrete vibrators, lasers, staplers and nailers. In the particular example provided, the system of power tools 10 includes a first power tool 12a and a second power tool 12b. For example, the first power tool 12a can be a drill/driver similar to that which is described in U.S. Patent No. 6,431,289, while the second power tool 12b can be a circular saw similar to that which is described in U.S. Patent No. 6,996,909. The battery pack 16 can be selectively removably coupled to the first and second power tools 12a and 12b to provide electrical power thereto. Except as otherwise described herein, the battery pack 16 can be configured in a manner that is similar to that which is described in U.S. Patent Application Publication No. 2006/0096771. The battery pack 16 can also be selectively electrically coupled to the battery pack charger 18 to charge the battery pack 16. It is noteworthy that the broader aspects of this disclosure are applicable to other types of battery powered devices.

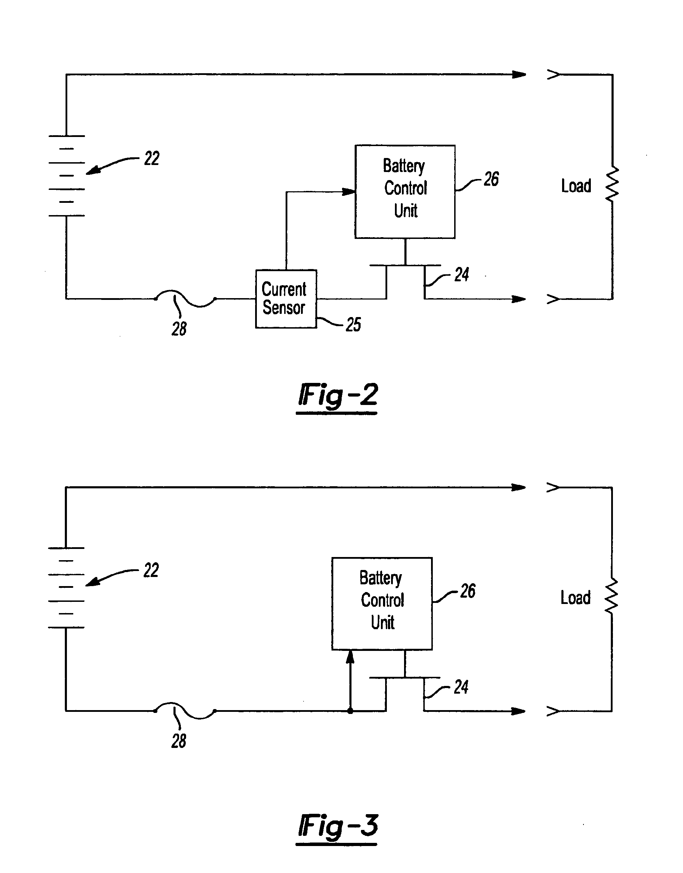

Figure 2 illustrates an exemplary circuit configuration for an overcurrent protection mechanism 20 integrated into a battery pack 16. The overcurrent protection mechanism 20 is comprised generally of battery cells 22, a switch 24 for controlling discharge of the battery cells, a current sensor 25, and a battery control unit 26. The overcurrent protection mechanism 20 may also include a fuse 28 placed in series with the battery cells. Each of these components is preferably integrated into the battery pack 16. However, it is envisioned that one or more of these components, excluding the battery cells, may be located in a battery charger, a power tool or some other external device operably coupled to the battery pack.

The battery pack may include a plurality of battery cells 22 connected in series, and/or a plurality of serially-connected strings of cells, in which the strings are in parallel with one another. For purposes of describing the exemplary embodiments, the battery pack may be composed of cells having lithium-ion cell chemistry. In the context of cordless power tools, the nominal voltage rating of the battery pack is typically at least 18 volts. However, other voltage ratings are contemplated for different applications. In addition, the battery pack may be composed of cells of another lithium-based chemistry, such as lithium metal or lithium polymer, or other chemistry such as nickel cadmium (NiCd), nickel metal hydride (NiMH) and lead-acid, for example, in terms of the chemistry makeup of individual cells, electrodes and electrolyte of the pack. Although not limited thereto, the battery pack 16 is preferably rechargeable.

A battery control unit 26 embedded within the battery pack 16 is responsible for protecting the battery cells and monitoring any fault conditions which may develop. In an exemplary embodiment, the battery control unit 16 is implemented in software on a digital microcontroller. However, the battery control unit 26 may be embodied in hardware or software as a digital microcontroller, a microprocessor or an analog circuit, a digital signal processor or by one or more digital ICs such as application specific integrated circuits (ASICs), for example.

Discharge current from the battery cells and charge current to the battery cells can be clamped or discontinued through the use of a switch 24. The switch 24 may be placed in series with the battery cells on the low voltage side of the battery cells. The switch 24 can then be controlled by the battery control unit to interrupt current flow to/from the battery cells. In an exemplary embodiment, the switch 24 is a transistor (e.g., a MOSFET). Other types of switches are also contemplated by this disclosure.

The current sensor 25 is configured to sense the current being supplied by the battery and provide a signal indicative of the sensed current to the battery control unit 26. In an exemplary embodiment, the current sensor 25 may be implemented using a current shunt disposed in series with the battery cells 22. The current shunt is preferably positioned on the low voltage side of the battery cells. In an alternative embodiment, the switch 24 is used as the current sensor (see Figure 3). In other words, the battery control unit 26 monitors the current being drawn across the switch 24. In the case of the transistor, the current is measured using the resistance Rₒₙ as a current shunt that converts the current into a voltage that can be read by the battery control unit. Other types of current sensors (e.g., a Hall effect current sensor) are also within the scope of this disclosure.

The battery control unit 26 implements a re-settable software-implemented fuse. In operation, the battery control unit 26 receives a signal indicative of current from the current sensor 25. When the current value exceeds some threshold, the battery control unit 25 controls the switch 24 to interrupt current flow from the battery cells, thereby avoiding a damaging overcurrent scenario. In this way, the software-implemented fuse is designed to protect components in the battery pack as well as components outside of the battery pack such as an electrical device connected thereto. For example, the software fuse may be designed to protect the battery cells, cell interconnects, battery straps, welds, power switches, wiring, an attached tool, etc.

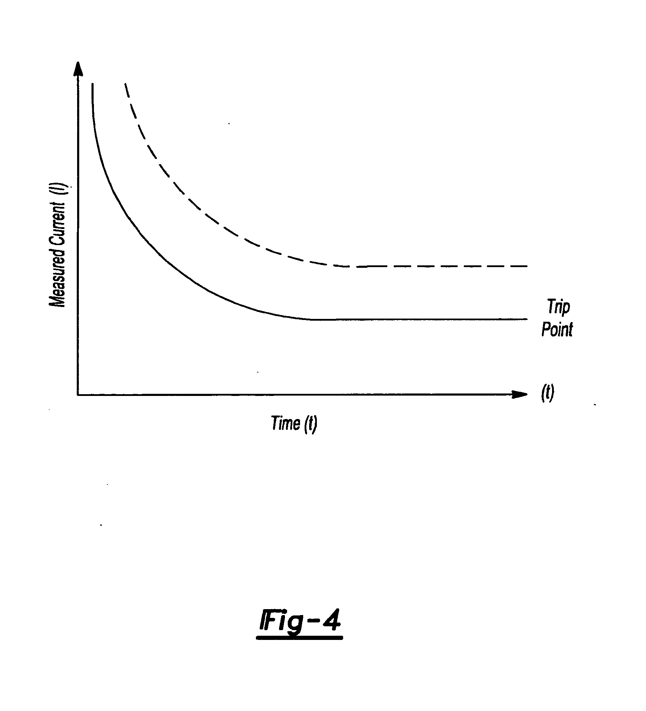

In an exemplary embodiment, the battery control unit 26 controls the switch as a function of current and time. If current is high, circuit components are only capable of withstanding very short durations of such current levels before overheating and/or failing. On the other hand, when current is sufficiently low, circuit components are able to operate indefinitely without overheating or failing. This relationship is defined by the squared value of current over time as shown in Figure 4. The battery control unit 26 may implement this relationship as the trip point for the software-implemented fuse. For instance, the trip point may be defined as: F(I, t) = ∫ l² dt, where I is the sensed current value from the current sensor 25. When the trip point is exceeded, the battery control unit 26 initiates a protective action to protect the battery pack. For instance, the battery control unit 26 may open the switch 24 and thereby interrupt current flow from the battery. The trip point for the software-implemented fuse is preferably less than the trip point of fuse 28 as shown in Figure 4. In the event of a malfunction of the software-implemented fuse, fuse 28 provides a secondary protection mechanism.

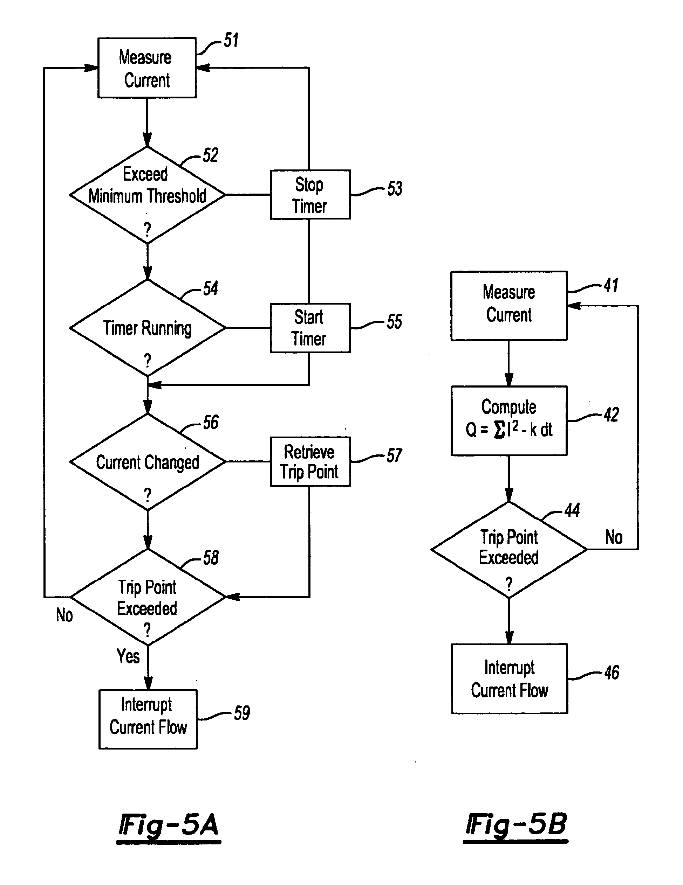

Figure 5A illustrates an exemplary implementation for how this function may be implemented by the battery control unit 26. Current sensed by the current sensor 25 is being continually reported to or measured by the battery control unit 26 as indicated at 41. For instance, the current may be measured every 100 ms. Current value over a period of time may be computed at 42 using the following function: Q = Σ l² - k dt. Thus, the measured current is squared and summed with previous current measurements. A constant k is used to select a minimum value the summation will be incremented. The summed current value is then compared at 44 to a predefined trip point. When the summed current value exceeds the trip point, the battery control unit initiates a protective action to protect the battery pack as indicated at 46; otherwise, monitoring continues at 41.

Figure 5B illustrates an alternative implementation for how this function may be implemented by the battery control unit 26. Current sensed by the current sensor 25 is being continually reported to or measured by the battery control unit 26 as indicated at 51. The sensed current is first compared at 52 to a predetermined minimum current threshold value. When the sensed current does not exceed the minimum current threshold, there is no risk of an overcurrent scenario and no further evaluation is needed. If a timer was previously running, the timer is terminated as indicated at 53.

When the sensed current exceeds the minimum current threshold, there is a risk of an overcurrent scenario. In this case, the battery control unit will start a timer at 55. Prior to doing so, a check is performed at 54 to see if a timer has been previously started. If so, this step is bypassed.

Next, the battery control unit will evaluate the trip point of the software-implemented fuse. A timeout value is retrieved from a lookup table. The timeout value will correlate to the sensed current value. As discussed above, the higher the sensed current value, the shorted the timeout value. The timeout values are stored in a lookup table stored in a memory device associated with the battery control unit. It is readily understood that table values will depend on the particular application and may be derived accordingly.

The timeout value is then compared to the timer value as indicated at 58. When the timer value exceeds the timeout value, the battery control unit will open the switch 24 and thereby interrupt current flow from the battery cells. In other words, the timeout value serves as the trip point for the software-implemented fuse. When the timer value does not exceed the timeout value, another current measure is obtained. If the current changes while the timer is running 56, a new timeout value will be retrieved as indicated at 57; otherwise, processing remains as described above. It is to be understood that only the relevant steps of the methodology are discussed in relation to Figure 5, but that other software-implemented instructions may be needed to control and manage the overall operation of the system. It is also contemplated that the fuse function described above may be implemented in hardware using digital or analog circuitry or a combination thereof.

The software-implemented fuse may be temperature compensated so as to avoid spurious protective actions from occurring during normal operations, in which the user is drilling down or some tool application causes the user to run the tool hard for a short period of time. In exemplary embodiments, the trip point of the software-implemented fuse may be compensated for temperature variations in either the switch or the battery cells. In this case, the timeout value is retrieved from a lookup table based on a temperature value and the sensed current value. Alternatively, the trip point may be compensated based on the voltage level of the battery cells in a similar manner. Compensating the trip point for other battery parameters is also contemplated.

In addition, the software-implemented fuse may function cooperatively with an over-discharge protection feature. In an exemplary implementation, current discharge from the battery pack is interrupted when an individual cell voltage or the battery stack voltage drops below a predefined voltage threshold. In a more robust implementation, the voltage threshold for the over-discharge function is dynamically varied based on other operating conditions, such as pack temperature or instantaneous discharge current. The over-current and over-discharge protection features enable the battery pack to meet the varied operating conditions found in power tool applications.

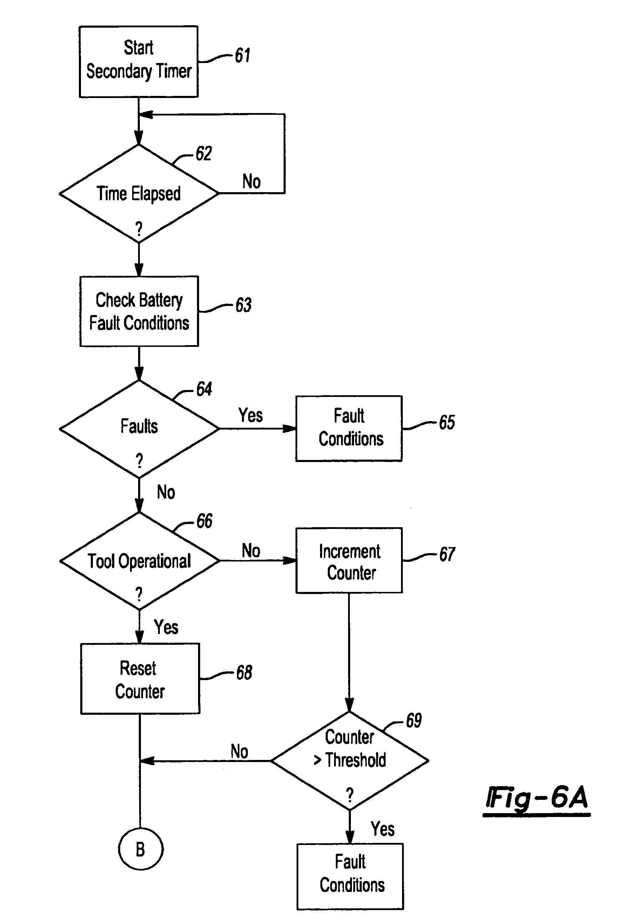

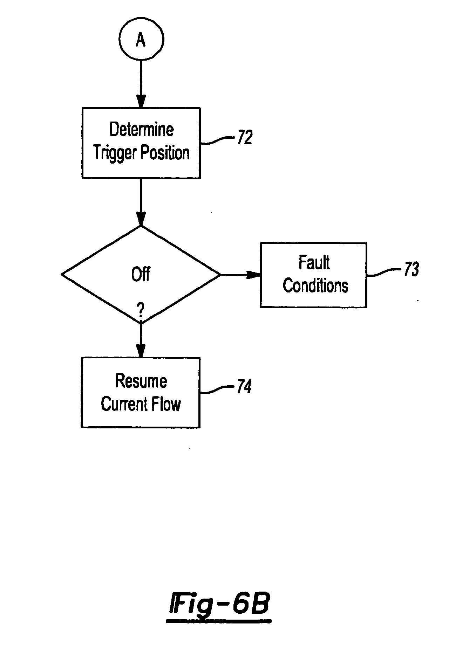

Software-implemented fuses are advantageous in that they may be re-set. In other words, the battery control unit may subsequently close the switch, thereby permitting current to flow from the battery. Prior to closing the switch, it is prudent to allow any heat generated by the overcurrent situation to dissipate. Thus, a secondary timer is started at 61 once the switch is initially opened by the battery control unit as shown in Figure 6. The battery control unit will not close the switch until a predetermined period of time has elapsed 62 as denoted by the secondary timer. Before the switch is closed, other fault criteria may be evaluated as further discussed below.

With continued reference to Figures 6A and 6B, a few exemplary criteria may be checked when the battery pack is operably coupled to a power tool. First, the battery control module may check if any battery fault conditions exist as indicated at 63. For example, does the voltage level of the battery cells exceed some minimum threshold. If so, the software-implemented fuse may be reset; otherwise, the switch remains open and an indicia of the fault condition may be generated 65 by the battery control unit. Additional battery fault conditions may be checked and are contemplated by this disclosure.

Next, the battery control module may determine if the power tool has been operational 66 since the last overcurrent condition was detected. Overcurrent conditions are frequently caused by operating conditions of the tool which may change over time or otherwise resolve themselves (e.g., a bit jam condition of a drill). If the tool has not been operational, then a counter is incremented at 67. When the counter reaches some predetermined number without the tool having been operational, it may be inferred that the problem causing the overcurrent condition will persist. In this case, the software-implemented fuse is not reset and an applicable indicia of the fault condition may be generated 70 by the battery control unit. On the other hand, if the tool has been operational, then the counter may be reset at 68.

The battery control unit may also monitor a trigger switch of the power tool at 72. When the trigger switch of the tool is an off position, the software-implemented fuse may be reset as indicated at 74. Conversely, when the trigger switch of the tool is in an on position, the battery control unit will not close the switch, but rather generate an indicia of a fault condition. This prevents the power tool from starting up unexpectedly. It is envisioned that other criteria associated with the power tool may monitored by the battery control unit prior to resetting the software-implemented fuse. Likewise, it is to be understood that only the relevant steps of the methodology are discussed in relation to Figure 6, but that other software-implemented instructions may be needed to control and manage the overall operation of the system.

The above description is merely exemplary in nature and is not intended to limit the present disclosure, application, or uses

## Claims

1. A battery pack, comprising:
one or more battery cells (22);
a switch (24) in series with the battery cells (22); and
a battery control unit (26) embedded as software instructions in a controller and configured to measure current across the switch (24), the battery control unit (26) operable to control the switch (24) to interrupt current flow from the battery cells (22) as a function of current and time **characterised in that** the battery control unit (26) is operable to integrate a square value of the current over time and open the switch (24) when the integrated value exceeds a threshold.

2. The battery pack of claim 1 wherein the switch (24) is defined as a transistor.

3. The battery pack of claim 1 wherein the battery control unit (26) is operable to open the switch (24) when the current exceeds a threshold.

4. The battery pack of claim 1 wherein the battery control unit (26) is operable to close the switch (24) after a period of time has passed.

5. The battery pack of claim 1 is operably coupled to a power tool, wherein the battery control unit (26) is operable to close the switch only when a trigger switch of a power tool is in an off position.

6. The battery pack of claim 1 wherein the battery control unit (26) is operable to close the switch (24) when a battery fault condition is deemed safe.

7. The battery pack of claim 1 wherein the battery control unit (26) is operable to close the switch when a voltage level of the battery cells (22) exceeds a threshold.

## Patentansprüche

1. Batteriesatz, umfassend:
eine oder mehrere Batteriezellen (22);
einen Schalter (24) in Reihe mit den Batteriezellen (22); und
eine Batteriesteuereinheit (26), die als Softwarebefehle in eine Steuerung eingebettet ist und dazu gestaltet ist, den Strom über den Schalter (24) zu messen, wobei die Batteriesteuereinheit (26) dazu betriebsfähig ist, den Schalter (24) so zu steuern, dass der Stromfluss von den Batteriezellen (22) als eine Funktion des Stroms und der Zeit unterbrochen wird,
**dadurch gekennzeichnet, dass** die Batteriesteuereinheit (26) dazu betriebsfähig ist, einen Quadratwert des Stroms im Zeitablauf zu integrieren und den Schalter (24) zu öffnen, wenn der integrierte Wert einen Schwellenwert überschreitet.

2. Batteriesatz nach Anspruch 1, wobei der Schalter (24) als Transistor definiert ist.

3. Batteriesatz nach Anspruch 1, wobei die Batteriesteuereinheit (26) dazu betriebsfähig ist, den Schalter (24) zu öffnen, wenn der Strom einen Schwellenwert überschreitet.

4. Batteriesatz nach Anspruch 1, wobei die Batteriesteuereinheit (26) dazu betriebsfähig ist, den Schalter (24) zu schließen, nachdem eine Zeitspanne vergangen ist.

5. Batteriesatz nach Anspruch 1, der betrieblich mit einem Elektrowerkzeug gekoppelt ist, wobei die Batteriesteuereinheit (26) dazu betriebsfähig ist, den Schalter nur zu schließen, wenn sich ein Auslöseschalter eines Elektrowerkzeugs in einer AUS-Stellung befindet.

6. Batteriesatz nach Anspruch 1, wobei die Batteriesteuereinheit (26) dazu betriebsfähig ist, den Schalter (24) zu schließen, wenn ein Batteriefehlerzustand als ungefährlich erachtet wird.

7. Batteriesatz nach Anspruch 1, wobei die Batteriesteuereinheit (26) dazu betriebsfähig ist, den Schalter zu schließen, wenn ein Spannungspegel der Batteriezellen (22) einen Schwellenwert überschreitet.

## Revendications

1. Bloc de piles, comprenant :
une ou plusieurs piles (22) ;
un commutateur (24) en série avec les piles (22) ; et
une unité de commande de piles (26) noyée sous la forme d'instructions logicielles dans un dispositif de commande et configurée pour mesurer le courant aux bornes du commutateur (24), l'unité de commande de piles (26) étant à même de commander le commutateur (24) pour interrompre l'écoulement de courant issu des piles (22) en fonction du courant et du temps, **caractérisé en ce que** l'unité de commande de piles (26) est à même d'intégrer une valeur carrée du courant en fonction du temps et d'ouvrir le commutateur (24) lorsque la valeur intégrée dépasse un seuil.

2. Bloc de piles selon la revendication 1, dans lequel le commutateur (24) est défini comme un transistor.

3. Bloc de piles selon la revendication 1, dans lequel l'unité de commande de piles (26) est à même d'ouvrir le commutateur (24) lorsque le courant dépasse un seuil.

4. Bloc de piles selon la revendication 1, dans lequel l'unité de commande de piles (26) est à même de fermer le commutateur (24) après l'écoulement d'une certaine période de temps.

5. Bloc de piles selon la revendication 1, qui est couplé en service à un outil électrique, dans lequel l'unité de commande de piles (26) est à même de fermer le commutateur uniquement lorsqu'un commutateur de détente d'un outil électrique est en position fermée.

6. Bloc de piles selon la revendication 1, dans lequel l'unité de commande de piles (26) est à même de fermer le commutateur (24) lorsqu'un état de défaillance des piles est constaté avec certitude.

7. Bloc de piles selon la revendication 1, dans lequel l'unité de commande de piles (26) est à même de fermer le commutateur lorsqu'un niveau de tension des piles (22) dépasse un seuil.
